Europäisches Patentamt

European Patent Office

Office européen des brevets

(19)

(11) **EP 0 689 858 A1**

(12) **EUROPÄISCHE PATENTANMELDUNG**

(43) Veröffentlichungstag:
03.01.1996 Patentblatt 1996/01

(51) Int. Cl.⁶: **A62D 3/00**

(21) Anmeldenummer: 95105470.9

(22) Anmeldetag: 11.04.1995

(84) Benannte Vertragsstaaten:
AT BE CH DE DK ES FR GB GR IE IT LI LU MC NL PT SE

(71) Anmelder: **HARD AG**
**CH-8604 Volketswil (CH)**

(72) Erfinder:
• **Frey, Alfred**
**CH-1470 Estavayer-le-Lac (CH)**
• **Ulrich, Hans-Jakob, Dr. sc. nat. ETH**
**CH-5200 Brugg (CH)**

(74) Vertreter: **Troesch Scheidegger Werner AG**
**CH-8050 Zürich (CH)**

(54) **Verfahren zur Immobilisierung von Schwermetallen und Element**

(57) Es wird ein Verfahren zur Immobilisierung von Schwermetallen, die in einer in mobiler Form vorliegenden Substanz vorhanden sind, wie Elektrofilterasche, vorgeschlagen, bei dem die Substanz mit Kalk emulgiert wird und die Mischung darauf hydrothermal ausgehärtet wird.

# Beschreibung

Die vorliegende Erfindung betrifft Verfahren nach dem Oberbegriff von Anspruch 1 sowie ein Element nach demjenigen von Anspruch 10.

Die Erfindung geht vom Problem aus, dass in gewissen, in mobiler Form vorliegenden Substanzen, d.h. flüssigen, pulver- oder staubförmigen Substanzen, insbesondere Filteraschen, dabei vor allem Elektrofilteraschen, Schlacken und Schlämmen, oft hohe Schwermetallkonzentrationen vorliegen, derart, dass die erwähnten Substanzen nicht ohne Schutzmassnahmen gelagert werden können, weil Witterungseinflüsse, insbesondere Wasser, die Schwermetalle ausschwemmen würden. Dies wiederum ergäbe eine nicht tolerable Belastung, insbesondere von Anbauflächen, Grundwasser etc.

Es sind deshalb Verfahren bekannt, solche Substanzen in Stoffe einzubinden, um damit die Eluierung (Auswaschung) der Schwermetalle zu verringern. In gewissen Ländern, so auch in der Schweiz, sind Verordnungen gültig, die festlegen, wieviel Milligramm Schwermetalle pro Liter Eluat aus den zu lagernden, die Substanzen enthaltenden Stoffen ausgewaschen werden dürfen. Entsprechend der Schärfe dieser Bestimmungen werden beispielsweise Inertstoffdeponien oder Reststoffdeponien festgelegt.

Zum Immobilisieren derartiger Substanzen, insbesondere ihrer Schwermetalle, ist es bekannt, die in mobiler Form vorliegenden Substanzen mit Portlandzement einzubinden und aushärten zu lassen. Obwohl dieses Vorgehen grossindustriell durchaus geeignet ist, ergeben sich hoher Zementbedarf und damit hohe Energiebedürfnisse für dessen Herstellung (Brennen bei ca. 1450°C): Zement ist relativ teuer.

Die vorliegende Erfindung setzt sich zum Ziel, Verfahren eingangs genannter Art vorzuschlagen,

a) welche grossindustriell mit wesentlich geringerem Energieaufwand durchgeführt werden können, dabei, mindestens genähert, mit den bekannten Verfahren vergleichbare Eluattestresultate ergeben und/oder

b) bei welchen die Eluattestresultate wesentlich verbessert sind.

Im weiteren ist es Aufgabe der vorliegenden Erfindung, ein mittels des erwähnten erfindungsgemässen Verfahrens hergestelltes Lagerelement vorzuschlagen, womit das anfallende Material kommerziell und ökologisch sinnvoll gelagert werden kann.

Zu diesem Zweck zeichnen sich die erfindungsgemässen Verfahren nach dem kennzeichnenden Teil von Anspruch 1 aus bzw. nach demjenigen von Anspruch 2, ein erfindungsgemässes Element nach Anspruch 10.

Beim erfindungsgemässen Verfahren nach Anspruch 1 werden einerseits in grossen Mengen kostengünstig erhältlicher Kalk sowie bevorzugterweise Calcium-Silicat-Hydrate (CSH) eingesetzt, wie Bauschlamm etc. Aufgrund der Tatsache, dass dabei, wenn überhaupt, weniger Zement als bei oben angeführtem Vorgehen eingesetzt wird, sind auch die Energieaufwendungen, über alles betrachtet, wesentlich geringer. Um so erstaunlicher ist, dass die Eluattests, insbesondere was die Schwermetalle Cadmium, Blei und Zink anbelangt, ergeben, dass sich mit dem erfindungsgemässen Verfahren nach Anspruch 1, mindestens was bis heute ermittelt wurde, eher bessere Resultate ergeben als durch das bekannte Einzementieren und Brennen.

Auch das Verfahren nach Anspruch 2, obwohl grosstechnisch schwieriger zu handhaben als das Verfahren nach Anspruch 1, wenn auch mit ebenso preisgünstig erhältlichen und ökologisch unbedenklichen Substanzen, nämlich Wasserglas, ergibt erstaunlicherweise wesentlich bessere Resultate als beim erwähnten bekannten Einzementieren und Brennen.

In einer bevorzugten Ausführungsform des erfindungsgemässen Verfahrens nach Anspruch 3 wird eine CSH-Emulsion erstellt und hydrothermal ausgehärtet. Vor und/oder nach Ausführung des Verfahrens nach Anspruch 1 oder Anspruch 3 kann die mobile Substanz gegebenenfalls in der dem Resultat dieser Verfahren entsprechenden Form in eine Wasserglaslösung eingebracht werden.

Bevorzugte Ausführungsformen des erfindungsgemässen Verfahrens sind in den Ansprüchen 4 bis 9, des erfindungsgemässen Elementes in den Ansprüchen 11 bis 15 spezifiziert.

Dabei können die Resultate, Kosten sowie die Verfahrenstechnik optimiert werden, indem Verfahrensschritte nach Anspruch 1 und/oder Anspruch 2 mit weiteren der in den Ansprüchen spezifizierten oder noch weiteren kombiniert eingesetzt werden.

Das erfindungsgemässe Verfahren eignet sich insbesondere für die Immobilisierung von Schwermetallen in Aschen, insbesondere Filteraschen, dabei ganz bevorzugterweise Elektrofilteraschen, sowie weiter von Schlacken, Schlämmen etc.

Analog weist das erfindungsgemässe Element als Anreicherungsstoff insbesondere eine Asche auf. Auch wenn am erfindungsgemässen Element ein Anreicherungsstoff, wie ihn Anspruch 10 fordert, gegebenenfalls nicht nachgewiesen werden kann, unterscheidet er sich doch klar von vorbekannten dadurch, dass sein im überwiegend aus Calcium-Silicat-Hydrat bestehendes Material, wie erwähnt, gegenüber gleichem Material vorbekannter Bauelemente, einen wesentlich erhähten Schwermetallgehalt aufweist, nämlich im Bereich des Gehaltes von nicht unbehandelt lagerbaren Substanzen.

Die Erfindung wird anschliessend anhand von Beispielen erläutert.

Dabei wurden, wie nachfolgend beschrieben werden wird, verschiedene erfindungsgemässe Beispiele bzw. Experimente durchgeführt und bezüglich Eluierverhaltens mit einem Referenzbeispiel verglichen.

In allen Beispielen wurde das Eluierverhalten wie folgt ermittelt, wobei hierzu auf die Richtlinien der schweizerischen Technischen Verordnung über Abfälle (TVA) verwiesen sei, Stand 1991:

**Eluattest**

Die Proben werden in destilliertem Wasser, in welches kontinuierlich $CO_2$ eingeblasen wird, wahrend zweimal je 24 Stunden eluiert.

Als Kenngrösse für das Eluierverhalten der bis anhin ausgewerteten Schwermetalle Cd, Pb und Zn wird der Quotient $\frac{\text{Konzentration Schwermetall im Eluat in mg/l}}{\text{Grenzwert der TVA für Inertstoffqualität in mg/l}}$ ausgewertet.

Für die vorerst betrachteten Schwermetalle Cd, Pb, Zn gelten laut TVA folgende Inertstoff-Grenzwerte:

| Cd: | 0,01mg/l |
|-----|----------|
| Pb: | 0,1mg/l |
| Zn: | 1,0mg/l |

**Verwendete Elektrofilterasche**

Die in allen Versuchen verwendete Elektrofilterasche ergab bei den Eluattests folgende Resultate (mg/l):

| Cd: | 134,3 |
|-----|-------|
| Pb: | 11,5 |
| Zn: | 39,2 |

**1. Referenzbeispiel (Z)**

Für das Referenzbeispiel Z wurde die Elektrofilterasche E wie folgt behandelt:
Es wurde die folgende Mischung erstellt, wobei sich die Angaben auf g/kg Trockensubstanz am Fertigmaterial beziehen:

| Portlandzement: | 289,1 |
|-----------------|-------|
| Asche: | 667,5 |
| Kalk: | 43,4 |

Die Asche wurde mit Wasser, Kalk und Portlandzement vermischt und an der Luft ausgehärtet.

Die Eluattests an den Referenzproben Z ergaben folgendes (mg/l):

| Cd: | 24,2 |
|-----|------|
| Pb: | 2,8 |
| Zn: | 19,1 |

**2. Erfindungsgemässe Ausführungsformen**

**2.1 Minimalvorgehen**

Ebenso, wie das Referenzbeispiel mit Z bezeichnet wurde, werden die nachfolgenden Beispiele auch mit Kennbuchstaben bezeichnet, um eine einfachere Bezugnahme zu den vorgenommenen Verfahrensschritten zu ermöglichen.

**Beispiel 1 (K)**

Dieses Beispiel entspricht dem Vorgehen nach Anspruch 1, wobei zusätzlich CSH in die Emulsion eingebracht wurde. Die Asche wurde mit Sand und Kalk vermischt unter geringer Wasserzugabe. Der feuchte Brei wurde anschliessend mit ca. 1bar gepresst und im Autoklaven bei ca. 200°C und bei 16bar hydrothermal gehärtet.

Das Resultat setzte sich in g/kg Trockensubstanz wie folgt zusammen:

| Sand: | 417,7 |
|-------|-------|
| Asche: | 417,7 |
| Kalk: | 164,6 |

Der Eluattest ergab folgende Resultate:

| Cd: | 21,2 |
|-----|------|
| Pb: | 3,1 |
| Zn: | 9,8 |

Verglichen mit dem Referenzbeispiel Z ist das Eluierverhalten des erfindungsgemässen Beispiels K bezuglich Zn wesentlich besser und bezüglich Cd und Pb im wesentlichen gleich gut. Allerdings ist das eingesetzte Zusatzmaterial wesentlich kostengünstiger.

**Beispiel 2 (W)**

Es wurde wie folgt vorgegangen:
Asche wurde direkt mit Wasserglas vermischt, gepresst und an der Luft gehärtet.

Die gehärtete Masse setzte sich wie folgt zusammen (g/kg TS):

| Asche: | 554,1 |
|---|---|
| Wasserglas: | 445,9 |

Die Eluattests ergaben (mg/l):

| Cd: | 7,8 |
|---|---|
| Pb: | 1,4 |
| Zn: | 5,0 |

Obwohl dieses "Wasserglasverfahren" insbesondere grosstechnisch schwieriger zu handhaben ist als das "hydrothermale Härtungsverfahren", zeigt sich im Vergleich mit dem Referenzbeispiel Z, dass das erfindungsgemässe Vorgehen nach W bereits für sich ganz wesentliche Verbesserungen bezüglich des Eluierverhaltens ergibt.

**3. Bevorzugte weitere Vorgehen und Vorgehensmischformen**

**Beispiel 3 (H)**

Sandschlamm, Portlandzement, Gips und Al-Pulver als bevorzugtes Reduktionsmittel und Wasser wurden gemischt und der Brei auf ca. 40°C erwärmt, dann die Asche zugegeben. Anschliessend wurde Kalk zugegeben, dann die Mischung in Gussformen transferiert und im Autoklaven bei 200°C und 16bar hydrothermal gehärtet. Dabei wurde eine Aufheizphase von ca. 4 Stunden und eine Reaktion bei den 200°C und 16bar während 6 Stunden durchgeführt.

Wiederum bezogen auf das resultierende Material ergaben sich folgende Verhältnisse (g/kg TS):

| PC-Zement: | 201,6 |
|---|---|
| Sand: | 340,5 |
| Asche: | 340,5 |
| Kalk: | 89,6 |
| Gips: | 26,9 |
| Al-Pulver: | 0,76 |

Die Eluattests ergaben:

| Cd: | 10,9 |
|---|---|
| Pb: | 2,0 |
| Zn: | 6,3 |

Verglichen mit dem Referenzbeispiel Z ergibt sich eine wesentliche Verbesserung des Eluierverhaltens nach dem erfindungsgemässen Beispiel H Dabei wird durch Zugabe des Treibmittels, insbesondere des Aluminiumpulvers in bevorzugter Art, ein spezifisch leichteres Endmaterial ähnlich Porenbeton erhalten, was für den erfindungsgemässen Einsatz solchen Materials als Bauelementmaterial wesentliche Vorteile bringen kann.

**Beispiel 4 (ZW)**

Gemäss diesem Beispiel wurde das Vorgehen nach dem Referenzbeispiel Z mit dem erfindungsgemässen W kombiniert, und zwar wurde das Zement-abgebundene Material sowohl unzerkleinert (ZW) wie auch pulverisiert ($ZW_p$) mit Wasserglas gemischt.

Für ZW wurden ca. 100cm³ grosse Probekörper nach Z während zwei Tagen in flüssiges Wasserglas eingebracht und anschliessend während ca. einer Woche an der Luft getrocknet, bevor sie dem Eluattest unterzogen wurden. Für $ZW_p$ wurden die Proben aus Z im Achatmörser zerkleinert und mit Wasserglas vermischt. Nach Trocknung an der Luft wurden die gehärteten Proben eluiert.

Am Resultatmaterial ergab sich (g/kg TS):

|  | ZW | $ZW_p$ |
|---|---|---|
| PC-Zement: | 272,1 | 166,8 |
| Asche: | 628,1 | 385,1 |
| Kalk: | 40,8 | 25,0 |
| Wasserglas: | 59,0 | 423,0 |

Folgendes waren die Resultate des Eluattests:

|  | ZW | $ZW_p$ |
|---|---|---|
| Cd: | 2,7 | 3,3 |
| Pb: | 0,6 | 2,2 |
| Zn: | 1,8 | 2,1 |

Mit beiden Vorgehen wurde eine massgebliche Verbesserung des Eluierverhaltens bezuglich des Referenztests Z gefunden.

**Beispiel 5 (KW und $KW_p$)**

In diesem Beispiel wurde das nach Beispiel 1, K, hydrothermal gehärtete Material unzerkleinert (KW) bzw. pulverisiert ($KW_p$) nach dem Wasserglasverfahren von Anspruch 2 bzw. Beispiel W weiterbehandelt. Hierzu wurde vorerst nach dem ersten Beispiel (K) vorgegangen und darnach nach dem zweiten (W). Gesamthaft wurden für das fertige Material folgende Trockensubstanzen eingesetzt:

|  | KW | $KW_p$ |
|---|---|---|
| Sand: | 397,4 | 198,5 |
| Asche: | 397,4 | 198,6 |
| Kalk: | 156,5 | 78,3 |
| Wasserglas: | 48,7 | 524,1 |

Die Eluattests ergaben folgende Resultate:

|  | KW | $KW_p$ |
|---|---|---|
| Cd: | 8,6 | 17,2 |
| Pb: | 2,6 | 55,9 |
| Zn: | 2,0 | 2,3 |

Wiederum wurde ein Eluierverhalten erzielt, das für KW wesentlich besser ist als das Referenzbeispiel Z.

**Beispiel 6 (ZH)**

Die Asche wurde vermischt mit Zement, Kalk und Wasser (Z). Darnach wurde die hydrothermale Härtung gemäss Beispiel 3 (H) vorgenommen.

Die ausgehärtete Masse setzte sich wie folgt zusammen (g/kg TS):

| PC-Zement: | 289,3 |
|---|---|
| Asche: | 665,8 |
| Kalk: | 44,9 |

Die Eluattests ergaben folgendes:

| Cd: | 23,5 |
|---|---|
| Pb: | 2,1 |
| Zn: | 12,0 |

Daraus ist ersichtlich, dass bereits der Schritt der hydrothermalen Aushärtung anstelle des Brennens nach Beispiel Z mindestens zu gleich guten Resultaten wie das wesentlich teurere Brennen nach Z ergibt.

**Beispiel 7 (WH)**

Hier wurde die Asche erst mit Wasserglas behandelt und vor dem Aushärten mit Silicaten gemischt und dann hydrothermal gehärtet.

Es wurde gemäss Beispiel 3 (H) vorgegangen, zusätzlich vor der Aluminiumpulverzugabe noch Wasserglas beigemischt.

Das ausgehärtete Material hatte folgende Zusammensetzung (g/kg TS):

| PC-Zement: | 202,5 |
|---|---|
| Sand: | 162,0 |
| Asche: | 286,8 |
| Kalk: | 90,0 |
| Gips: | 27,0 |
| Al-Pulver: | 0,77 |
| Wasserglas: | 230,8 |

Durch Zugabe des Reduktionsmittels als Treibmittel, nämlich des Al-Pulvers, wurde porenbetonartiges Material realisiert. Der Eluattest ergab folgendes (mg/l):

| Cd: | 5,7 |
|---|---|
| Pb: | 0,8 |
| Zn: | 5,6 |

**Beispiel 8 (HW)**

Hier wurde die Asche mit Calcium-Silicat-Hydrat hydrothermal ausgehärtet, dabei Aluminiumpulver zum Erhalt einer porenbetonartigen Struktur beigefügt. Die Proben, erhalten gemäss Beispiel 3 (H), wurden anschliessend mit Wasserglas gemäss Beispiel 4 behandelt.

Die Fertigsubstanz enthielt folgende Trockensubstanzanteile (g/kg TS):

| PC-Zement: | 142,0 |
|---|---|
| Sand: | 239,6 |
| Asche: | 239,6 |
| Kalk: | 63,1 |
| Gips: | 18,9 |
| Al-Pulver: | 0,54 |
| Wasserglas | 295,8 |

Die Eluattests ergaben folgendes:

| Cd: | 2,8 |
|---|---|
| Pb: | 4,7 |
| Zn: | 0,5 |

Es ist ohne weiteres möglich, nach der hydrothermalen Härtung das resultierende Material erst zu pulverisieren, bevor es mit Wasserglas behandelt wird ($HW_p$).

**Beispiel 9 ($ZHW$ und $ZHW_p$)**

Es wurde nach Beispiel 6 vorgegangen, das Resultat unzerkleinert (ZHW) und pulverisiert ($ZHW_p$) mit Wasserglas behandelt.

Die jeweiligen Proben waren wie folgt zusammengesetzt:

| | ZHW | $ZHW_p$ |
|---|---|---|
| PC-Zement: | 253,9 | 133,4 |
| Asche: | 584,5 | 307,0 |
| Kalk: | 39,4 | 20,7 |
| Wasserglas: | 222,1 | 539,0 |

Die Eluattests ergaben:

| | ZHW | $ZHW_p$ |
|---|---|---|
| Cd: | 3,6 | 5,6 |
| Pb: | 3,7 | 22,8 |
| Zn: | 1,0 | 1,6 |

**Beispiel 10 (MH)**

Hier wurde gemäss Beispiel 3 (H) vorgegangen, jedoch die Asche vorgängig chemisch entmetallisiert.

Die Entmetallisierung erfolgte chemisch mit Säure, Komplexbildnern und Oxidationsmitteln. Anschliessend wurde die getrocknete Asche gemäss Beispiel 3 (H) verarbeitet.

Die Fertigsubstanz setzte sich wie folgt zusammen (g/kg TS):

| PC-Zement: | 193,1 |
|---|---|
| Sand: | 347,0 |
| Asche: | 347,0 |
| Kalk: | 55,1 |
| Gips: | 26,1 |
| Al-Pulver: | 0,78 |

Die Eluattests ergaben:

| Cd: | 0,3 |
|---|---|
| Pb: | 4,6 |
| Zn: | 1,0 |

**Beispiel 11 (MHW)**

Hier wurde gemäss Beispiel 10 entmetallisierte Asche gemäss Beispiel 8 behandelt.

Die entmetallisierte Asche wurde gemäss Beispiel 3 (H) hydrothermal gehärtet, dann pulverisiert und mit Wasserglas vermischt. Nach der Härtung wurden die Probenkörper eluiert.

Die fertige Trockenmasse setzte sich wie folgt zusammen:

| PC-Zement: | 139,2 |
|---|---|
| Sand: | 250,3 |
| Asche: | 250,3 |
| Kalk: | 62,1 |
| Gips: | 18,8 |
| Al-Pulver: | 0,56 |
| Wasserglas: | 278,7 |

Die Eluattests ergaben:

| Cd: | 2,4 |
|---|---|
| Pb: | 2,6 |
| Zn: | 0,0 |

Damit ist ersichtlich, dass, ausgehend von den erfindungsgemässen Basisverfahren, nämlich Mischen der Schwermetall-kontaminierten Substanzen primär mit Kalk, vorzugsweise aber mit Calcium-Silicat-Hydrat, und hydrothermalem Aushärten einerseits, anderseits Behandeln der kontaminierten Substanz mit Wasserglas, in weitgehendst beliebigen Kombinationen auch mit weiteren Verfahrensschritten sich kostengünstig mindestens gleich gute, in manchen Fallen bezüglich Eluierverhaltens wesentlich verbesserte Substanzen ergeben.

Es versteht sich von selbst, dass nach dieser grundsätzlichen Erkenntnis das Vorgehen optimiert werden kann.

Das nach den beschriebenen erfindungsgemässen Verfahren hergestellte Material eignet sich ausgezeichnet als Lagerelementmaterial zur Erzeugung der in den Ansprüchen spezifizierten Lagerelemente.

**Patentansprüche**

1. Verfahren zur Immobilisierung von Schwermetallen, die in einer in mobiler Form vorliegenden Substanz enthalten sind, dadurch gekennzeichnet, dass es mindestens folgende Schritte umfasst:

   - Einbringen eines Stoffes mit der Substanz in eine Emulsion mit Kalk,
   - hydrothermales Aushärten der resultierenden Emulsion.

2. Verfahren nach dem Oberbegriff von Anspruch 1, dadurch gekennzeichnet, dass es mindestens folgende Schritte umfasst:

   - Einbringen eines Stoffes mit der Substanz in eine Wasserglaslösung und
   - Aushärten der Lösung.

3. Verfahren nach Anspruch 1, dadurch gekennzeichnet, dass man den Stoff in eine Emulsion mit Calcium-Silicat-Hydrat einbringt.

4. Verfahren nach Anspruch 1 oder 3, dadurch gekennzeichnet, dass man davor und/oder darnach das Verfahren nach Anspruch 2 ausführt.

5. Verfahren nach einem der Ansprüche 1 bis 4, dadurch gekennzeichnet, dass man zur Bildung des Stoffes die Substanz mit mindestens einem Zusatzstoff, vorzugsweise mit Zement, mischt.

6. Verfahren nach einem der Ansprüche 1 bis 5, dadurch gekennzeichnet, dass man die Substanz mit Zement abbindet und zerkleinert oder unzerkleinert als Stoff einbringt.

7. Verfahren nach einem der Ansprüche 1 bis 6, dadurch gekennzeichnet, dass man eine hydrothermale Härtung vornimmt und davor in die Emulsion ein Oxidationsmittel, vorzugsweise Aluminiumpulver, einbringt.

8. Verfahren nach einem der Ansprüche 1 bis 7, dadurch gekennzeichnet, dass man in die Emulsion Zement und/oder Sand und/oder Gips und/oder Wasserglas einbringt sowie Kalk.

9. Verfahren nach Anspruch 4, dadurch gekennzeichnet, dass man das Material vorgelagerter Verfahrensschritte in nachgelagerte als ausgehärteten Feststoff, zerkleinert oder unzerkleinert, einbringt.

10. Lagerelement, dadurch gekennzeichnet, dass es zu einem wesentlichen Anteil Kalk enthält sowie eine Anreicherungssubstanz enthält und sein Schwermetallgehalt wesentlich höher ist als bei einem gleichen Element ohne Anreicherungssubstanz.

11. Element nach Anspruch 10, dadurch gekennzeichnet, dass das Material zu einem überwiegenden Anteil aus Calcium-Silicat-Hydrat (CSH) besteht.

12. Element nach einem der Ansprüche 10 oder 11, dadurch gekennzeichnet, dass das Material ein Reduktionsmittel, vorzugsweise Aluminium, enthält.

13. Element nach einem der Ansprüche 10 bis 12, dadurch gekennzeichnet, dass das Material Wasserglas enthält.

14. Element nach einem der Ansprüche 10 bis 13, dadurch gekennzeichnet, dass das Material Zement enthält.

15. Element nach einem der Ansprüche 10 bis 14, dadurch gekennzeichnet, dass es als Anreicherungsstoff eine Asche, einen Schlamm oder Schlacke enthält.

Europäisches Patentamt

**EUROPÄISCHER RECHERCHENBERICHT**

Nummer der Anmeldung

EP 95 10 5470

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 427 899 (GOMACRIS S A SOC) 22.Mai 1991<br><br>* Spalte 3, Zeile 22-50 *<br>* Spalte 4, Zeile 44 - Spalte 5, Zeile 13 * | 1-6, 8-11, 13-15 | A62D3/00 |
| Y | | 7,12 | |
| Y | DATABASE WPI<br>Section Ch, Week 8028<br>Derwent Publications Ltd., London, GB;<br>Class A93, AN 80-48963C<br>& JP-A-55 071 660 ( YAMAGUCHI-KEN) ,<br>30.Mai 1980<br>* Zusammenfassung * | 7,12 | |
| X | EP-A-0 602 293 (BLANGY GERARD DE) 22.Juni 1994<br>* Seite 3, Spalte 45-56 *<br>* Seite 4, Zeile 36-38 * | 1-4, 7-13,15 | |
| X | WO-A-92 21409 (DEMOS DRUZSTVO) 10.Dezember 1992<br>* Ansprüche * | 1,2,4 | **RECHERCHIERTE SACHGEBIETE (Int.Cl.6)**<br><br>A62D |
| X | DATABASE WPI<br>Section Ch, Week 8633<br>Derwent Publications Ltd., London, GB;<br>Class A11, AN 86-218016<br>& SU-A-1 204 577 ( KALININ POLY) ,<br>15.Januar 1986<br>* Zusammenfassung * | 1 | |
| A | EP-A-0 408 545 (TECHFORM ENGINEERING AG) 16.Januar 1991 | | |
| A | DE-A-39 09 060 (PAHL EKKE DIPL ING) 20.September 1990 | | |

Der vorliegende Recherchenbericht wurde für alle Patentansprüche erstellt

| Recherchenort | Abschlußdatum der Recherche | Prüfer |
|---|---|---|
| DEN HAAG | 31.August 1995 | Dalkafouki, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................................
& : Mitglied der gleichen Patentfamilie, übereinstimmendes
    Dokument

EPO FORM 1503 03.82 (P04C03)